## Europäisches Patentamt
## European Patent Office
## Office européen des brevets

(19)

(11) Numéro de publication: **0 071 542
B1**

(12)

# FASCICULE DE BREVET EUROPEEN

(45) Date de publication du fascicule du brevet:
13.11.85

(51) Int. Cl.⁴: **G 01 B 5/00**, G 01 B 7/28

(21) Numéro de dépôt: 82401431.0

(22) Date de dépôt: 30.07.82

(54) Contrôle du profil d'une feuille cintrée, notamment du galbe de vitrages bombés.

(30) Priorité: 31.07.81 FR 8114968

(43) Date de publication de la demande:
09.02.83 Bulletin 83/6

(45) Mention de la délivrance du brevet:
13.11.85 Bulletin 85/46

(84) Etats contractants désignés:
AT BE DE FR IT SE

(56) Documents cités:
DE - A - 1 623 271
FR - A - 1 458 319
FR - A - 2 248 487
FR - A - 2 441 580
US - A - 3 364 728

(73) Titulaire: **SAINT-GOBAIN VITRAGE, Les
Miroirs 18, avenue d'Alsace, F-92400 Courbevoie (FR)**

(84) Etats contractants désignés: **BE FR IT SE AT**

(73) Titulaire: **VEGLA Vereinigte Glaswerke GmbH, Viktoria
Allee 3-5, D-5100 Aachen (DE)**

(84) Etats contractants désignés: **DE**

(72) Inventeur: **Sauvage, Philippe, 28 rue des Sablons,
F-60200 Compiegne (FR)**

(74) Mandataire: **Leconte, Jean-Gérard et al, Saint-Gobain
Recherche 39, Quai Lucien Lefranc,
F-93304 Aubervilliers Cedex (FR)**

## Description

L'invention concerne un procédé et un dispositif de contrôle du profil d'une feuille cintrée. Elle concerne plus particulièrement un dispositif destiné au contrôle du galbe de vitrages bombés tels que des pare-brise ou d'autres glaces d'automobiles.

C'est à cette application que l'on se réfère dans la suite de la présente description, mais il apparaît clairement à l'homme de l'art que le dispositif conforme à l'invention s'applique au contrôle du profil de tout autre type de feuilles cintrées.

L'évolution de la technique automobile, tant pour des raisons d'ordre industriel que pour accroître les qualités esthétiques des véhicules, a conduit à équiper ceux-ci de vitrages présentant un bombage de plus en plus accentué. Ces vitrages n'en doivent pas moins être montés en série sur les carrosseries des voitures et ils doivent par conséquent avoir une forme et des dimensions parfaitement fidèles à celles définies par le constructeur de voitures.

Il est donc nécessaire, à la sortie des chaînes de fabrication, de contrôler le galbe des vitrages et, de façon idéale, chaque vitrage devrait être soumis à ce contrôle. Dans la pratique, toutefois, en raison de la complexité des opérations de contrôle qu'impliquent les dispositifs d'un type connu utilisés dans ce but, on n'effectue que des contrôles discrets, sur un ou plusieurs vitrages d'un même lot de fabrication.

Ces dispositifs jusqu'à maintenant employés pour contrôler les vitrages d'automobiles comprennent, par exemple, un gabarit dont la forme est telle qu'il épouse celle de la feuille de verre sur sensiblement toute sa surface externe, des capteurs à sonde de mesure de position étant prévus sur le gabarit à distance les uns des autres, en vue de contrôler la conformité de la feuille de verre (brevet FR-A-2 441 580). Les points d'appui d'une feuille de verre sur le gabarit ne sont cependant jamais identiques d'une feuille à l'autre et, pour un même vitrage, diffèrent d'une opération de contrôle à l'autre. Or un très faible écart de positionnement du vitrage peut entraîner des différences considérables des mesures relevées. Ainsi par exemple, sur un vitrage de 50 cm × 50 cm, on a mesuré qu'un écart de positonnement de un millimètre pouvait se traduire par une erreur de 0,34 mm dans la valeur du galbe, et les différences de positionnement peuvent atteindre et même dépasser 2 mm.

Les vitrages doivent donc être mis en place avec soin sur le gabarit, sans que l'on ait pour autant la certitude que les points de contact de la feuille de verre avec le gabarit soient des points de référence invaribles.

Le vitrage n'étant de plus pas maintenu en position sur le gabarit pendant le contrôle, les opérations de mesure sont longues et peuvent être perturbées par des vibrations accidentelles de la feuille de verre. Dans le but d'éviter ou de réduire ces vibrations, les vitrages doivent d'ailleurs être disposés avec douceur sur le gabarit, ce qui ralentit la cadence des opérations et explique qu'en fait, on ne contrôle que certains vitrages, prélevés au hasard dans tout un lot de fabrication, et que l'on soit dans l'impossibilité de faire porter les opérations de vérification de conformité sur tous les vitrages fabriqués.

Enfin, il est nécessaire de disposer d'un gabarit pour chaque type de vitrage, ce que majore le coût des opérations.

D'autres dispositifs tels que ceux décrits dans les brevets US 3 321 838 et US 3 364 728, conçus pour contrôler des objets en verre autres que des vitrages pour automobiles, notamment des écrans de télévision en forme de calotte sphérique, d'une part comprennent des moyens de maintien des objets qui soit coopèrent avec des encoches ou des marques prévues à cet effet dans lesdits objets, soit tirent parti de la forme sphérique bien particulière, d'autre part nécessitent des opérations longues et minutieuses tant pour la mise en place des objets que pour le contrôle lui-même. De tels dispositifs ne peuvent pas fonctionner à cadence élevée et no sont pas utilisables pour contrôler des vitrages d'automobiles n'ayant pas la forme de calotte sphérique et exempts de marques.

L'invention a pour premier objet un procédé tel que défini dans la revendication 1.

L'invention vise à remédier aux inconvénients des dispositifs antérieurs en proposant un dispositif de contrôle súr lequel la feuille centrée exempte de marques peut être amenée en position sans précaution particulière, dans laquelle ladite feuille est maintenue fermement pendant les opérations de mesure, qui se prête à des contrôles à cadence élevée permettant de vérifier en continu la conformité de toutes les feuilles venant de fabrication, qui est d'une conception simple permettant de limiter le montant des investissements, et qui ne soit pas spécifique d'une seule forme de feuille cintrée.

A cet effet, l'invention a pour second objet un dispositif de contrôle du galbe d'une feuille cintrée notamment du galbe de vitrages bombés, qui comprend un cadre-support apte à supporter la feuille par trois plots d'appui fixes en position par exemple au voisinage de ses bords, des moyens de centrage de la feuille par rapport auxdits plots, un moyens de serrage de la feuille à l'aplomb de l'un au moins desdits plots, et des moyens pour mesurer le galbe de la feuille et le comparer à un galbe de référence (voir revendication 2).

Du fait que la feuille cintrée prend appui sur trois plots fixes en position et qu'elle est préalablement centrée par rapport à ces plots, on ne rencontre plus les inconvénients inhérents à la technique antérieure, dans laquelle la feuille prend appui par un ensemble de points aléatoires de sa surface externe contre le gabarit de référence, avec pour conséquence une non-reproductibilité de deux mesures successives sur une même feuille et l'absence de fiabilité de mesures faites sur deux feuilles différentes.

En outre comme la structure du dispositif selon l'invention comprend seulement un cadre-support desdits plots, il est possible de l'équiper d'un grand nombre de moyens de mesure du galbe de la feuille cintrée, tels que des capteurs à sonde de mesure de position, sans que se posent des problèmes d'encombrement de ces capteurs par rapport à un gabarit de référence.

Avantageusement, les moyens de centrage de la feuille cintrée par rapport aux plots d'appui comprendront des moyens de guidage tels que des drageoirs comportant une partie inclinée en direction du cadre-support, disposés latéralement par rapport à celui-ci en vue d'amener rapidment cette feuille dans une position correspondant grossièrement à la position de référence et des ensembles de centrage, essentiellement des organes moteurs, des vérins par exemple, pour repousser latéralement la feuille en butée contre trois desdits moyens de guidage servant de points de référence pour le contrôle de la feuille en appui sur les plots.

Celle-ci ne pourra pas subir de déplacement accidentel en cours de mesure, ni entrer en vibration, du fait du moyen de serrage prévu à l'aplomb de l'un des plots d'appui. De façon simple, ce moyen de serrage pourra comprende une butée élastique disposée au droit du plot d'appui considéré et commandée par un vérin ou similaire.

La mise en position d'une feuille cintrée sur un tel dispositif s'effectuera donc de manière particulièrement simple en amenant cette feuille à l'aplomb du cadre-support à l'aide d'un moyen de manutention, par exemple au moyen d'un système à ventouse, et en la lâchant ensuite sans précaution spéciale au droit des moyens de guidage, par rapport auxquels elle glissera pour venir prendre appui sur les plots du cadre-support dans une position correspondant grossièrement à la position de contrôle. Il suffira alors de la repousser latéralement à l'aide des vérins ou autres organes moteurs des moyens de centrage prévus dans ce but, jusqu'à ce qu'elle vienne en butée contre les trois moyens de guidage servant de référence, et de la serrer contre l'un des plots d'appui pour pouvoir procéder aux opérations de contrôle.

Avantageusement ces opérations seront synchronisées automatiquement à l'aide d'un ensemble de programmation, commandé par un moyen de détection de la présence d'une feuille cintrée prévu à cet effet sur le dispositif conforme à l'invention. Dans de telles conditions, ce dispositif se prête à des cadences de contrôle extrêmement rapides, de l'ordre de huit dixièmes de seconde par feuille, alors que la cadence d'amenée des fauilles est en général bien supérieure, puisqu'elle varie entre 1 et 3 secondes.

Il est donc clair que l'invention propose un procédé permettant un contrôle systématique, facile et peu coûteux de toutes les feuilles cintrées venant de fabrication, avec pour conséquence une meilleurs qualité du produit fini et un contrôle plus facile et plus sûr des opérations auxquelles sont ensuite soumis ces feuilles.

Ce procédé consiste à laisser tomber chaque feuille à contrôler sur un dispositif de contrôle, à guider sa chute jusqu'au contact avec ce dispositif, puis à la pousser contre des organes de référence, à la supporter sur trois plots de référence non alignés, à la serrer à l'aplomb de l'un de ces plots, et à mesurer ses caractéristiques dimensionnelles.

Les dessins annexés illustrent la mise en oeuvre de l'invention. Sur ces dessins:

la figure 1 est une vue en perspective schématique du dispositif de contrôle conforme à l'invention,

la figure 2 est une coupe en élévation à plus grande échelle du système de serrage de la feuille de verre,

la figure 3 illustre la mise en place du vitrage sur le dispositif de contrôle,

la figure 4 est un schéma illustrant l'ensemble du système de programmation.

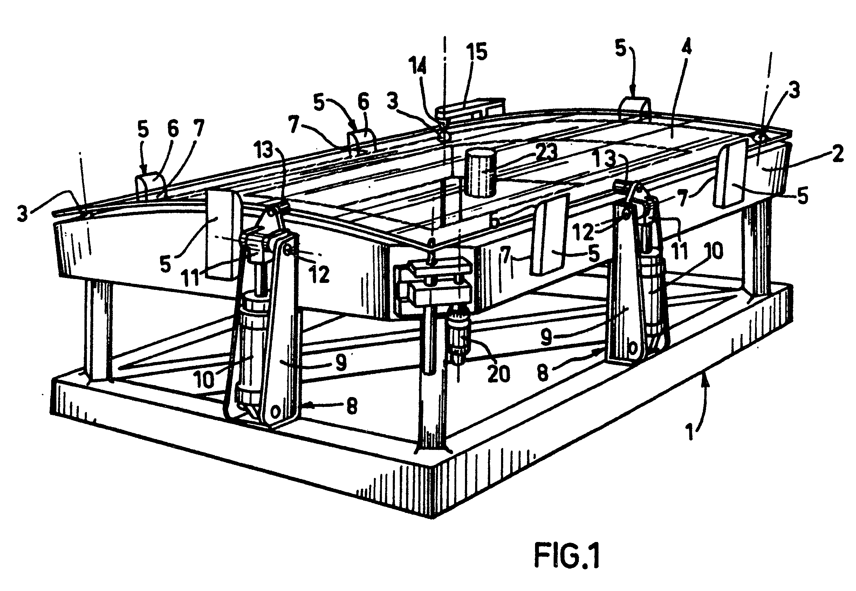

On se référera d'abord à la figure 1, qui représente une forme de réalisation du dispositif conforme à l'invention. Ce dispositif comprend une ossature rigide 1, supportant un cadre 2, muni de trois plots 3, sur lesquels prend appui une feuille de verre 4 dont on désire contrôler le galbe. Le cadre 2, a de préférence, mais non nécessairement, un profil sensiblement complémentaire de celui des bords de la feuille de verre 4.

Des drageoirs 5, servant d'organes de guidage de la feuille de verre 4, lorsque celle-ci est amenée en position, sont disposés latéralement par rapport au cadre 2. Ces drageoirs sont fixes en position et comportent une surface arrondie 6, inclinée en direction du cadre 2 et se raccordant à une face interne plate 7 servant d'organe de butée pour la feuille 4. Trois de ces drageoirs, non alignés, servent ainsi de butée de référence pour le centrage de la feuille 4 et des ensemble de centrage 8 sont prévus latéralement pour repousser la feuille en direction de ces butées. Dans le cas du dessin, ces ensembles de centrage 8 comprennent essentiellement une ossature 9, un vérin 10 et un organe de poussée 11, attaqué par la tige du vérin 10 et monté pivotant autour d'un axe 12 sur l'ossature 9, cet organe 11 comportant lui-même un poussoir 13, qui attaque latéralement la tranche de la feuille de verre 4.

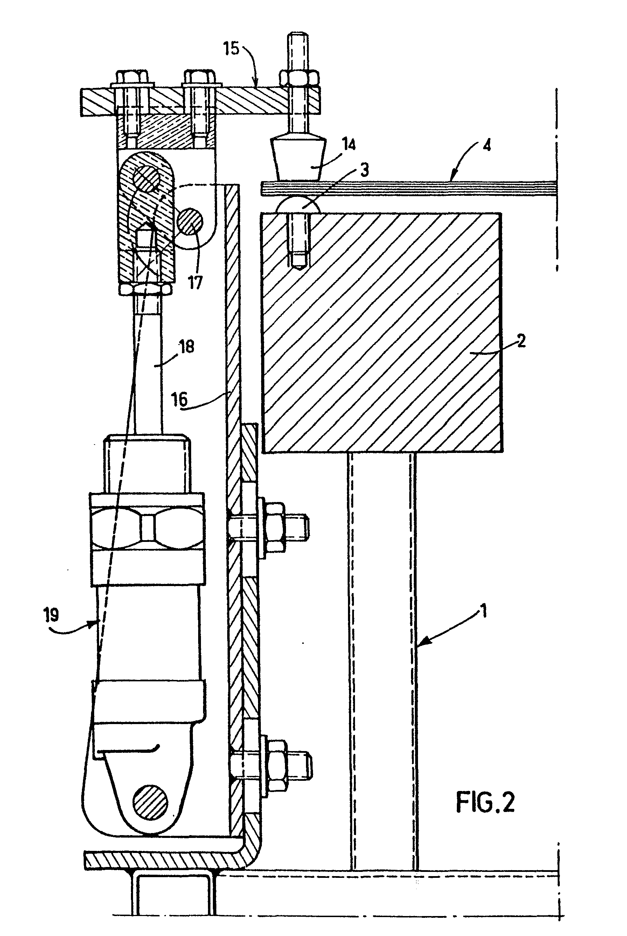

A l'aplomb de l'un des plots 3 est disposé un poussoir élastique 14, solidaire d'une tête de serrage 15, montée pivotante sur une ossature 16 autour d'un axe 17 et attaquée par la tige 18 d'un vérin 19 (figure 2).

Divers capteurs à sonde 20, aptes à mesurer la position de la feuille de verre 4, sont disposés en divers emplacements de la structure 1. Dans un souci d'allègement des dessins, un seul de ces capteurs a été représenté sur la figure 1, mais il est clair qu'il est possible de prévoir un nombre important de tels capteurs, en vue d'effectuer un contrôle précis du galbe de la feuille 4, et ce d'autant plus, qu'en l'absence de tout gabarit plein en contact avec la feuille de verre, il est possible de disposer ces capteurs en n'importe quelle position, en particulier à l'intérieur du cadre 2. Ces capteurs peuvent être de tout type connu en soi. Avantageusement, ils comporteront une tige rétractable, en vue d'éviter tout dommage à la feuille 4, lorsque celle-ci est amenée en position sur le dispositif. Ces capteurs seront par exemple fixés dans des encoches de la surface latérale du cadre 2, par l'intermédiaire d'une vis micrométrique permettant un réglage précis de leur position, l'étalonnage du dispositif s'effectuant par exemple à l'aide d'un vitrage témoin.

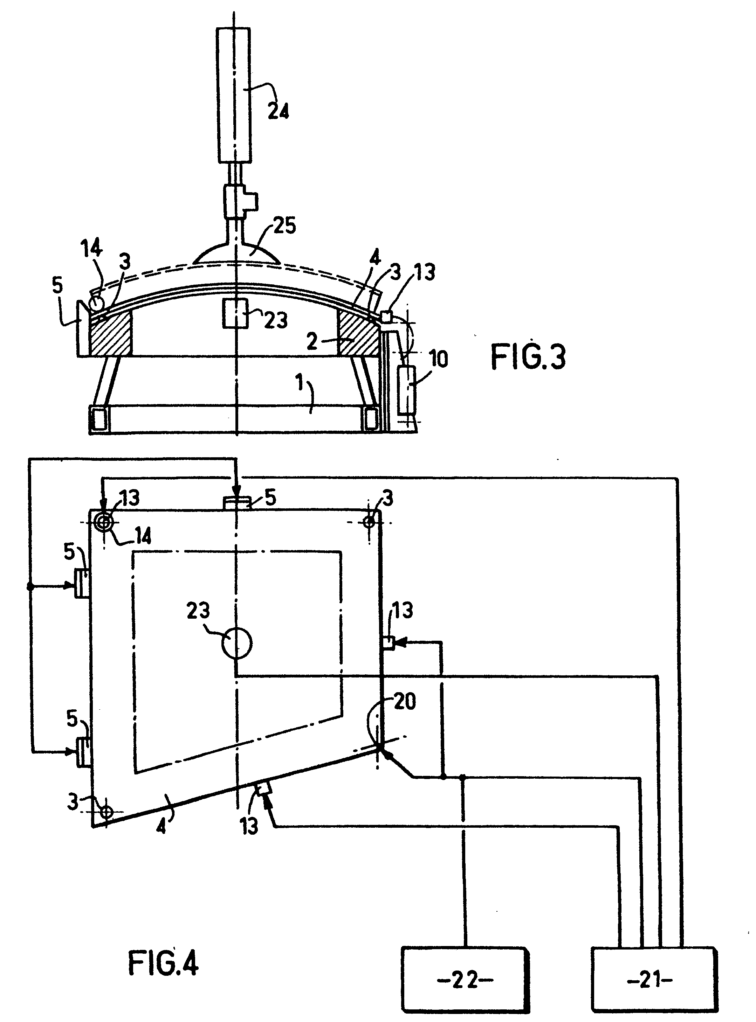

Un dispositif 21 de programmation et de traitement des informations (figure 4), équipé éventuellement d'un enregistreur 22 et connecté aux différents organes du dispositif, commande en continu le cycle des opérations, chaque cycle étant amorcé lorsqu'un capteur 23, disposé dans la partie centrale du dispositif, détecte l'arrivée en position de contrôle d'une feuille de verre 4.

Le cycle de contrôle de galbe d'un vitrage, avec le dispositif selon l'invention, se déroule de la façon suivante:

la feuille de verre 4, amenée à l'aplomb du cadre 2 par un dispositif de manutention 24 (figure 3), comprenant par exemple une ventouse de préhension 25 reliée à un circuit de vide, est simplement lâchée par ce dispositif au droit des drageoirs 5, sur la partie courbée 6 desquels elle glisse pour venir d'elle-même se placer grossièrement en position de contrôle. Le capteur 23 détecte alors sa présence et le dispositif de programmation 21 actionne les ensembles de centrage 8, dont les poussoirs 13 repoussent la tranche du vitrage 4, jusqu'à ce qu'il vienne en butée contre les trois drageoirs de référence 5, définissant la position dans laquelle est effectuée la mesure.

La tête de serrage 15 est alors abaissée pour pincer le vitrage entre le poussoir 14 et le plot 3 correspondant, de manière à l'immobiliser et à lui interdire toute vibration en cours de mesure, puis les ensembles de centrage 8 sont rétractés.

Les capteurs 20 entrent alors en action et contrôlent la forme de la feuille 4.

Lorsque la mesure est terminée, la tête de serrage 15 libère la feuille 4 qui est reprise par le système de manutention 24 et tranférée en aval vers un autre poste de fabrication, si elle est conforme aux normes de galbe exigées, ou évacuée au rebut, si elle ne satisfait pas à ces exigences.

Ainsi qu'il a été expliqué ci-dessus, de telles opérations peuvent être conduites avec une très grande rapidité, ce qui permet un contrôle de tous les vitrages bombés venant de fabrication, moyennant un coût réduit et à l'aide d'un dispositif d'une grande simplicité.

Avantageusement les informations recueillies par ce dispositif de contrôle de galbe pourront être utilisées en vue du pilotage des installations amont, installation de bombage notamment. Les défauts de galbe enregistrés seront analysés et les corrections sur les installations amont, nécessaires pour supprimer lesdits défauts, pourront être apportés.

Bien entendu un tel dispositif peut être employé pour contrôler les caractéristiques d'objets autres que des vitrages.

**Revendications**

1. Procédé de contrôle du galbe d'une feuille cintrée, notamment du galbe de vitrages bombés caractérisé en ce qu'on laisse tomber la feuille sur un dispositif de contrôle, qu'on guide sa chute jusqu'au contact avec ce dispositif, puis qu'on la pousse contre des organes de référence, qu'on la supporte sur trois plots non alignés, qu'on la serre à l'aplomb de l'un de ces trois plots et qu'on mesure ses caractéristiques dimensionnelles.

2. Dispositif de contrôle du galbe d'une feuille cintrée, notamment du galbe de vitrages bombés, comportant des moyens (20) pour mesurer le galbe de la feuille (4) et le comparer à un galbe de référence, caractérisé en ce qu'il comprend un cadre-support (2) apte à supporter la feuille (4) au voisinage de ses bords par trois plots d'appui (3) fixes en position, des moyens de centrage (8) de la feuille par rapport auxdits plots et un moyen de serrage (15) de la feuille à l'aplomb de l'un au moins desdits plots.

3. Dispositif selon la revendication 2, caractérisé en ce que lesdits moyens de centrage comprennent des moyens de guidage (5, 8), disposés latéralement par rapport au cadre-support et aptes à amener la feuille (4) à une position grossière de référence, et des organes moteurs (10) aptes à repousser latéralement la feuille en butée contre trois desdits moyens de guidage (5, 8) servant de point de référence.

4. Dispositif selon la revendication 3, caractérisé en ce que lesdits moyens de guidage comprennent des drageoirs (5) présentant une surface (6) inclinée en direction du cadre-support (2) et une surface plane (7) contre laquelle la feuille (4) vient en butée par la tranche correspondante.

5. Dispositif selon l'une des revendications 2 à 4, caractérisé en ce que le moyen de serrage de la feuille comprend un poussoir élastique (14) porté par une têtre de serrage (15) actionnée par un organe moteur (19).

6. Dispositif selon l'une des revendications 2 à 5, caractérisé en ce qu'il comporte un dispositif (21) de programmation et de traitement des informations, commandant et synchronisant les actions des différents organes (par exemple 13, 20, 23) du dispositif.

7. Dispositif selon la revendication 6, caractérisé en ce qu'il comporte un capteur (23) apte à détecter l'arrivée en position de contrôle d'une feuille de verre (4) sur le cadre-support (2) et à envoyer un signal de commande au dispositif de programmation (21).

8. Application du dispositif selon les revendications 2 à 7 au pilotage des installations de la ligne de fabrication en amont dudit dispositif, pour supprimer les défauts de galbe constatés.

**Patentansprüche**

1. Verfahren zur Kontrolle der Biegung einer gewölbten Scheibe, insbesondere der Hauptbiegung von bombierten Verglasungen, dadurch gekennzeichnet, daß man die Scheibe auf eine Prüfvorrichtung fallen läßt, ihren Fall bis zum Kontakt mit der Vorrichtung lenkt, dann die Scheibe gegen Bezugsglieder drückt, sie auf drei nicht fluchtenden Stützen abstützt, sie in der Senkrechten einer dieser drei Stützen einspannt und ihre Dimensionscharacteristika mißt.

2. Vorrichtung zur Kontrolle der Biegung einer gewölbten Scheibe, insbesondere der Hauptbiegung von bombierten Verglasungen, mit einer Einrichtung (20) zur Messung der Biegung der Scheibe (4) und zum Vergleich mit einer Bezugsbiegung, gekennzeichnet durch einen Stützrahmen (2) zum Abstützen der Scheibe (4) benachbart ihrer Ränder mittels dreier lagerfester Stützen, Einrichtungen (8) zur Zentrierung der Scheibe gegenüber den Stützen sowie mit einer Einrichtung (15) zum Aufspannen der Scheibe in der Senkrechten von mindestens einer der Stützen.

3. Vorrichtung nach Anspruch 2, dadurch gekennzeichnet, daß die Zentriereinrichtung seitlich am Stützrahmen angeordnete Führungseinrichtungen (5, 8) für eine Grobzuführung der Scheibe (4) in eine Bezugsstellung sowie Antriebe (10) zum seitlichen Andrücken der Scheibe in Anschlag an drei der Führungseinrichtungen (5, 8), welche als Bezugspunkt dienen.

4. Vorrichtung nach Anspruch 3, dadurch gekennzeichnet, daß die Führungseinrichtungen Führungskufen (5) aufweisen, die eine in Richtung des Rahmens (2) schräg geneigte Fläche (6) und eine ebene Fläche (7) aufweisen, gegen welche die Scheibe (4) mit dem entsprechenden Rand in Anschlag gelangt.

5. Vorrichtung nach einem der Ansprüche 2 bis 4, dadurch gekennzeichnet, daß die Aufspanneinrichtung für die Scheibe einen elastischen Drücker (14) aufweist, der auf einem durch einen Antrieb (19) betätigten Aufspannkopf (15) aufgenommen ist.

6. Vorrichtung nach einem der Ansprüche 2 bis 5, gekennzeichnet durch eine Vorrichtung (21) zur Programmierung und Informationsverarbeitung, welche die Arbeitsweise der verschiedenen Teile (beispielsweise 18, 20, 23) der Vorrichtung synchronisiert.

7. Vorrichtung nach Anspruch 6, gekennzeichnet durch einen Fühler (23) zur Ermittlung der Aufnahme einer Glasscheibe (4) in Prüflage auf dem Rahmen (2) und zur Abgabe eines Steuersignals an die Programmiervorrichtung (21).

8. Verwendung der Vorrichtung nach den Ansprüchen 2 bis 7 zur Steuerung von Fertigungsanlagen vor der Vorrichtung, um festgestellte Biegefehler zu verhindern.

**Claims**

1. A method of inspecting the shape of a curved sheet, such as the shape of curved panes, characterised in that the sheet is allowed to fall on to an inspection device, it is guided in its fall to make contact with the device, it is urged against reference members which support it on three non-aligned blocks, it is clamped vertically at one ot these three blocks and its dimensional characteristics are measured.

2. A device for inspecting the shape of a curved sheet, such as the shape of a curved pane, comprising means (20) for measuring the shape of the sheet (4) and comparing it with a reference shape, characterised in that it comprises a support frame (2) capable of supporting the sheet (4) adjacent its edges at three contact blocks (3) which are fixed in position, means (8) for centering the sheet relative to these blocks and a means (15) for clamping the sheet vertically at at least one of said blocks.

3. A device according to claim 2, characterised in that said centering means comprise guide means (5, 8) arranged laterally relative to the support frame and capable of bringing the sheet (4) to an approximate reference position, and motor members (10) capable of urging the sheet laterally into abutment against three of said guide means (5, 8) serving as reference points.

4. A device according to claim 3, characterised in that said guide means comprise bezels (5) having a surface (6) inclined in the direction of the support frame (2) and a planar surface (7) against which the sheet (4) comes into abutment at its corresponding edge.

5. A device according to one of claims 2 to 4, characterised in that the means for clamping the sheet comprises an elastic push member (14) carried by a clamping head (15) actuated by a motor member (19).

6. A device according to one of claims 2 to 5, characterised in that it comprises a programming and information processing device (21) controlling and synchronising the actions of the different members (such as 19, 20, 23) of the device.

7. A device according to claim 6, characterised in that it comprises a detector (23) capable of detecting arrival in the inspection position of a glass sheet (4) on the support frame (2) and sending a control signal to the programming device (21).

8. Application of a device according to claims 2 to 7 to operation of installations in a manufacturing line upstream of said device, to eliminate detected faults of shape.

FIG.1

FIG.2

**FIG.3**

**FIG.4**